# EUROPÄISCHE PATENTSCHRIFT

(11) **EP 3 012 083 B1**
(45) Veröffentlichungstag und Bekanntmachung des Hinweises auf die Patenterteilung: **12.10.2016**
(21) Anmeldenummer: 15187279.3
(22) Anmeldetag: 29.09.2015
(51) Int. Cl.: B29C 45/16, B29C 33/00, B29C 45/04

(54) **VERFAHREN UND WERKZEUG ZUR HERSTELLUNG EINES BAUTEILS, BAUTEIL**
METHOD AND TOOL FOR PRODUCING A COMPONENT, COMPONENT
PROCEDE ET OUTIL DE FABRICATION D'UN COMPOSANT ET COMPOSANT

(30) Priorität: 24.10.2014 DE 102014015648
(43) Veröffentlichungstag der Anmeldung: 27.04.2016
(73) Patentinhaber: GRAMMER AG, 92224 Amberg (DE)
(72) Erfinder: Hammerl, Detlef, 92224 Amberg (DE); Engelhart, Harald, 92245 Kümmersbruck (DE); Kurz, Helmut, 92237 Sulzbach-Rosenberg (DE)
(74) Vertreter: Hannke, Christian

(56) Entgegenhaltungen:
- EP-A1- 1 149 676
- DE-A1-102010 048 077
- DE-A1-102012 010 493

## Beschreibung

Die Erfindung betrifft ein Verfahren zum Herstellen eines Bauteils gemäß dem Oberbegriff des Patentanspruches 1 sowie ein Werkzeug zur Herstellung eines Bauteils gemäß dem Oberbegriff des Patentanspruches 8.

Bauteile aus geschäumten Werkstoffen werden meist dann produziert, wenn ein niedriges Gewicht bei gleichzeitig einfachem Herstellungsverfahren erzielt werden soll. Beim Schäumen kann beispielsweise einem Kunststoffgranulat ein Treibmittel zugegeben werden. Durch Wärmezufuhr spaltet sich ein flüchtiger Bestandteil des Treibmittels ab, was zum Aufschäumen der Schmelze führt. Dies kann zum Beispiel in einer dafür geeigneten Werkzeugform stattfinden. Beim gängigen Herstellen von Bauteilen aus PUR (Polyurethanschaum) werden beispielsweise Polyole mit Isocyanaten und einem Treibmittel (meist Wasser) vermischt. Die Polyole reagieren mit den Isocyanaten in einer Polyaddition zu PUR (Polyurethanschaum), und das Treibmittel bildet Gaseinschlüsse, die die zellige Struktur des Schaums verantworten.

Aus dem Stand der Technik der Spritzgussverfahren ist weiterhin das sogenannte IMC-Verfahren ("In-mould coating") bekannt. Hierbei wird vor dem eigentlichen Schäumprozess bzw. vor dem Füllen der Kavität die Oberfläche der Kavität der Werkzeughälften mit einem Werkstoff beschichtet, der - ggf. nach Aushärtung - eine Außenschicht des späteren Bauteils bildet. Dieser Werkstoff kann zum Beispiel in Form eines Lackes oder auch einer Folie vorliegen. Anschließend kann diese Bauteilaußenschicht nach Schließen der Werkzeugform mit Kunststoff hinterspritzt werden. So entstehen in einem Arbeitsschritt anspruchsvolle Oberflächen. Dieses Verfahren findet unter anderem bei der Herstellung von Kopfstützen für Fahrzeugsitze oder von Schutzhelmen Verwendung.

Die Druckschrift EP 1 149 676 A1 zeigt beispielsweise ein Verfahren und ein Werkzeug zur Herstellung eines Polsterteils mit einer ein Schaumteil umgebenden Außenschicht, bei welchem in einem ersten Verfahrensschritt die taschenförmige Außenschicht mit einem Füllstoff gefüllt wird und ein Polsterkörper entsteht. In einem zweiten Verfahrensschritt wird Dampf durch den Polsterkörper geleitet, wodurch zwischen den Füllstoffpartikeln und zwischen Füllstoff und Außenschicht Bindungen entstehen. Allerdings kann das Verfahren nur für Produkte angewendet werden, welche eine separat herstellbare Außenschicht aufweisen, und ist somit für Produkte mit am Werkzeug aushärtenden Außenschichten nicht geeignet.

Die Druckscrift DE102012010493 zeigt ein Verfahren zur Herstellung eines Fahrzeugteiles in einem Formwerkzeug, insbesondere eines FahrzeugInterieurbauteiles, dessen sichtseitige Deckschicht durch einen Polyurethan-Lack gebildet wird und dessen Trägerwerkstoff durch Polypropylen gebildet wird.

Allerdings kann es bei diesem Verfahren Probleme geben, wenn nämlich unerwünschter Überstand der Außenschicht, zum Beispiel Lacküberstand (auch als Lackflitter oder Lackfahne bezeichnet) als Grat an dem Bauteil überbleibt. Dieser Überstand ist nach Entformung des Bauteils nämlich vor allem an der Bauteilkante zu finden, die der Trennkante zwischen den beiden Werkzeughälften entspricht. Ein maschinelles Entfernen dieses Überstands gestaltet sich in der Praxis erfahrungsgemäß als sehr aufwändig, da eigentlich jedes Bauteil vorher einzeln eingescannt werden müsste, um den Fertigungstoleranzen beim Schäumen gerecht zu werden, und um danach den Lack abkratzen zu können.

Es gibt aus dem Stand der Technik einen Ansatz, bei dem nicht nur ein Lacküberstand, sondern auch ein Schaum-Überstand in Kauf genommen wird; dieser kann besser mechanisch abgeschnitten werden. Allerdings ist auch hier eine Nacharbeit erforderlich, die die Produktivität senkt und die Herstellungskosten erhöht.

Aufgabe der Erfindung ist es daher, die Herstellung eines derartigen Bauteils soweit zu optimieren, dass auf Nacharbeiten gänzlich verzichtet werden kann, indem ein Verfahren bzw. ein Werkzeug entwickelt wird, mittels derer bereits die Ausbildung des beschriebenen Überstands am Bauteil erfolgreich verhindert wird.

Gelöst wird diese Aufgabe gemäß den Merkmalen des Patentanspruches 1 und des Patentanspruches 8.

Ein wesentlicher Punkt der Erfindung liegt darin, dass ein Verfahren durchgeführt wird zum Herstellen eines Bauteils, welches bevorzugt aus Polyurethanschaum (PU-Schaum) besteht und welches eine Außenschicht aufweist, unter Verwendung einer Werkzeugform, welche zwei miteinander eine Kavität bildende Werkzeughälften umfasst, wobei die Werkzeughälften jeweils mindestens einen durch erste Oberflächen begrenzten Abschnitt der Kavität und jeweils mindestens einen daran angrenzenden eine erste Kontaktfläche ausbildenden Vollkörper umfassen, wobei zwischen den ersten Oberflächen und der ersten Kontaktfläche jeweils mindestens eine Trennkante ausgebildet ist, und welches die folgenden Verfahrensschritte umfasst:
a) Anordnen jeweils einer Maske auf die voneinander beabstandeten Werkzeughälften, wobei jeweils an der Maske angeordnete zweite Kontaktflächen die ersten Kontaktflächen abdecken,
b) Erwärmen der ersten Oberflächen auf eine erste Temperatur, wobei eine Differenz zwischen der ersten Temperatur und einer zweiten Temperatur von zweiten Oberflächen der Masken einen Wert aus einem Bereich von 5 bis 100 K, bevorzugt 20 bis 40 K, weiter bevorzugt 30 K beträgt,
c) Anordnen eines ersten nach Aushärtung die Außenschicht bildenden nicht-ausgehärteten Anteils eines ersten Werkstoffs auf die ersten Oberflächen und eines zweiten nicht-ausgehärteten Anteils des ersten Werkstoffs auf die zweiten Oberflächen,
d) Entfernen der Masken von den Werkzeughälften vor einem vollständigen Aushärten des zweiten Anteils des Werkstoffs, wobei ein Aushärtegrad des ersten Anteils höher ist als ein Aushärtegrad des zweiten Anteils,
e) Schließen der Werkzeugform durch Zusammenbringen der beiden ersten Kontaktflächen der Werkzeughälften,
f) Einfüllen mindestens eines zweiten Werkstoffs in die Kavität.

Es versteht sich, dass nach dem Einfüllen des mindestens einen zweiten Werkstoffs in die Kavität der eigentliche Schäumvorgang, wie er oben beschrieben ist, stattfindet. Nach einer entsprechenden Aushärtephase des gesamten Bauteils kann das Bauteil entformt werden. Hierzu werden beispielsweise die Werkzeughälften auseinander gefahren und das Bauteil mit Hilfe eines sogenannten Auswerfers aus der Kavität entfernt, mithin entformt.

Die erste Temperatur, auf die die ersten Oberflächen erwärmt werden, ist dabei höher als die zweite Temperatur, auf die die zweiten Oberflächen erwärmt werden.

Durch die Anordnung der Masken auf den Werkzeughälften werden deren Kontaktflächen jeweils bevorzugt vollständig abgedeckt, so dass der erste und der zweite Anteil des Werkstoffs bevorzugt nur auf die ersten Oberflächen der Kavität bzw. auf die zweiten Oberflächen der Masken aufgetragen wird.

Mit Oberflächen der Kavität sind die Oberflächen gemeint, die entstehen, wenn in der Werkzeugform die Gestalt der Kavität geformt, also beispielsweise eingefräst wird. Diese Oberflächen bilden also somit die Trennung zwischen der Kavität und dem Vollkörper der Werkzeugform. Die Form dieser ersten Oberflächen richtet sich also nach der gewünschten Form des Bauteils und kann daher zumindest abschnittsweise zweidimensional und bevorzugt dreidimensional ausgebildet sein. Die ersten Oberflächen der ersten Werkzeughälfte und die ersten Oberflächen der zweiten Werkzeughälfte bilden sozusagen die Hüllflächen für das herzustellende Bauteil, mithin die Kavität der Werkzeugform. Der Vollkörper ist also das restliche Volumen der Werkzeughälfte, das nicht zur Kavität gehört.

Die Kontaktflächen der Werkzeughälften sind bevorzugt eben ausgebildet und bevorzugt in der geschlossenen Werkzeugform einander zugewandt, weiter bevorzugt kontaktierend ausgebildet. Sie müssen wie oben beschrieben keine durchgehende Fläche bilden, sondern sind unterbrochen durch die "leeren" Flächen, die durch die Abschnitte der Kavität ausgebildet werden. Weiterhin möglich ist es, dass eine oder beide Kontaktfläche(n) aus mehreren Kontaktflächenabschnitten bestehen, wenn zum Beispiel die Kavität ringförmig ausgestaltet ist und in der Mitte der Kontaktfläche ein erster Kontaktflächenabschnitt und davon durch die leere ringförmige Fläche beabstandet ein zweiter Kontaktflächenabschnitt ausgebildet werden. Bevorzugt sind die Kontaktflächen der beiden Werkzeughälften hinsichtlich ihrer Form bzw. ihrer Geometrie zueinander spiegelsymmetrisch ausgebildet. Bevorzugt bildet die Kontaktfläche bzw. bilden die Kontaktflächen einer Werkzeughälfte und die zu dieser Werkzeughälfte gehörenden ersten Oberflächen der Kavität bevorzugt eine durchgehende Fläche aus, die wie oben beschrieben, abschnittsweise eben und abschnittsweise gewölbt bzw. dreidimensional ausgebildet sein kann.

Bevorzugt wird der erste Anteil und/ oder der zweite Anteil des Werkstoffs in Form eines Lacks, bevorzugt in Form eines Aerosols, aufgetragen.

Ein Lack ist ein flüssiger oder auch pulverförmiger Beschichtungsstoff, der bevorzugt aus den eigentlichen Lackpartikeln und einem Lösungsmittel wie zum Beispiel einem Gas besteht. Er wird bevorzugt durch Sprühen dünn aufgetragen und beispielsweise durch anschließendes Verdampfen des Lösungsmittels zu einem durchgehenden, festen Film aufgebaut. Diesen Übergang vom flüssigen oder pulverförmigen Zustand in den festen Zustand wird auch als Aushärten bezeichnet. Wenn der erste Werkstoff beispielsweise in Form einer Folie aufgetragen wird, ist natürlich kein Aushärten erforderlich.
Beispielsweise wird als Lack das Produkt "1K-Hydro-In Mould Coating 37R:458W" der Firma Fujichem Sonneborn Limited verwendet, wobei der Farbton des Lacks je nach Kundenwunsch eingestellt werden kann.

Ein geeigneter Lack wie das genannte Produkt härtet beispielsweise bei Zimmertemperatur, also ca. 25°C bereits aus. Bei höherer Temperatur wird die Aushärtezeit entsprechend verkürzt. Ein geeigneter Verfahrensparameter sieht vor, dass der Lack 45 Sekunden lang nach dem Auftragen ablüften bzw. aushärten darf. Dabei ist es wichtig, dass der erste Anteil des Lacks, also der Anteil auf den Werkzeughälften noch nicht vollständig getrocknet ist, da sonst keine Haftung mit dem anschließend eingebrachten PUR-Material gewährleistet ist. Für eine gute Anhaftung ist es nämlich nötig, dass Lack und PUR miteinander reagieren. Außerdem ist es natürlich wichtig, dass der zweite Anteil des Lacks ebenfalls noch nicht ausgehärtet ist und zudem einen geringeren Aushärtegrad als der erste Anteil aufweist, damit die oben erwähnte Gratbildung nicht stattfindet.

Der Aushärtegrad kann beispielsweise über die Ermittlung des Viskositätsgrades und/ oder des Restgehalts an Lösemittel der Anteile des Lacks ermittelt werden. Je höher die Viskosität bzw. je niedriger der Gehalt an Lösemittel, desto höher der Aushärtegrad des Lacks.

Durch die oben beschriebene benachbarte Anordnung der zweiten Oberflächen der Masken zu den Trennkanten sind erstere ebenfalls benachbart zu den ersten Oberflächen der Kavität angeordnet. Es bilden somit nach dem Anordnen der Masken auf die Werkzeughälften die ersten und die zweiten Oberflächen bevorzugt im Wesentlichen durchgehende Flächen aus, auf die der erste Werkstoff bevorzugt in Form einer Werkstoffschicht aufgebracht oder aufgetragen werden kann.

Bevorzugt härtet der erste Werkstoff in Form eines Lacks unter Temperaturerhöhung aus und bildet somit nach der Aushärtung die Außenschicht des herzustellenden Bauteils. Durch die oben beschriebene Erwärmbarkeit der ersten Oberflächen kann die Menge an Wärmeenergie, die in den auf diesen ersten Oberflächen angeordneten ersten Anteil des ersten Werkstoffs übergehen kann, in Relation zur Menge an Wärmeenergie, die in den auf den zweiten Oberflächen angeordneten zweiten Anteil des ersten Werkstoffs übergehen kann, gezielt erhöht werden. Somit kann wiederum der erste Anteil des Lackes oder der Lackschicht oder der Lackpartikel, der auf den ersten Oberflächen angeordnet wurde, schneller aushärten als der auf den zweiten Oberflächen angeordnete zweite Anteil, da diese zweiten Oberflächen nicht erwärmt werden bzw. nicht erwärmbar sind.

Beispielsweise wird die Werkzeugform, die die ersten Oberflächen ausbildet, auf eine Temperatur von 40°C bis 70°C, mehr bevorzugt von 50°C bis 60°C, bevorzugt von 55°C erwärmt.

Vor dem vollständigen Aushärten des Werkstoffs auf den zweiten Oberflächen werden die Masken wieder von den Werkzeughälften entfernt. Somit werden die ersten Oberflächen ebenfalls wieder von den zweiten Oberflächen getrennt, wodurch zwischen dem ersten und dem zweiten Anteil des Werkstoffs ebenfalls eine Trennung resultiert. Da der erste Anteil des Werkstoffs bereits in einem höheren Maße ausgehärtet ist als der zweite Anteil, wirken zwischen den Teilchen innerhalb des ersten bzw. zweiten Anteils Kohäsionskräfte und zwischen den Teilchen zwischen dem ersten und dem zweiten Anteil Adhäsionskräfte, wobei die Kohäsionskräfte stärker sind als die Adhäsionskräfte. Daher reißt die Werkstoffschicht zwischen dem ersten und dem zweiten Anteil unter Ausbildung einer sauberen Kante ab, wobei der Verlauf der sauberen Kante der Verlauf der Trennkante entspricht. Mit anderen Worten wird dadurch ein Überstand des ersten Werkstoffs, bevorzugt des Lackes über die Grenze der Kavität bzw. über die Grenze der Trennkante zwischen Oberflächen der Kavität und Kontaktfläche der Werkzeughälften hinaus vermieden.

Die Oberflächen der Kavität sind beispielsweise durch eine Flächenheizung und/ oder eine Volumenheizung erwärmbar. Dabei können die zur Flächenheizung gehörenden Flächen gleichzeitig die ersten Oberflächen der Kavität bilden. Als Mittel zur Erwärmung sind hier ebenfalls im Vollkörper einer oder beider Werkzeughälften verlegte Heizelemente denkbar, die zum Beispiel als Fluidleitelemente in Form von mit Wasser befüllbaren Rohren vorliegen. Analog dazu ist es natürlich ebenfalls denkbar, dass die Heizelemente als Kühlelemente fungieren, was durch die Wahl der Fluidtemperatur und/ oder die Inbetriebnahme separater Heiz- und Kühlkreisläufe beeinflusst werden kann. Gängige Heizverfahren im Spritzgussverfahren sind zum Beispiel Induktionsheizverfahren.

Die Ausbildung der sauberen Kante bzw. die Vermeidung der Ausbildung des Lacküberstands kann weiterhin erleichtert werden, wenn Übergänge an der mindestens einen Trennkante zwischen den zweiten Oberflächen und den ersten Oberflächen stufenfrei sind.

Weiterhin sind die Übergänge bevorzugt ohne plötzliche Sprünge (also stetig) und so ausgebildet, dass die zu beschichtenden ersten und zweiten Oberflächen direkt aneinander angrenzen. Weiter bevorzugt weist der Verlauf der ersten Oberflächen in Relation zum Verlauf der zweiten Oberflächen ebenfalls keine plötzliche Steigungsänderung auf. Dabei ist jeweils der Verlauf projiziert auf eine Ebene gemeint, die senkrecht zu den Kontaktflächen der Werkzeughälften und senkrecht zur Trennkannte, an der der Übergang stattfindet, angeordnet ist. Wenn die Übergänge wie beschrieben gestaltet sind, lässt sich nämlich eine besonders scharfe Trennung beider Anteile, beispielsweise der Lackanteile, durchführen.

Die gezielte Ausgestaltung der Übergänge lässt sich beispielsweise dadurch realisieren, dass für die Masken bzw. für die Stellen der Masken, die die Übergänge zu den ersten Oberflächen bilden, ein im gewissen Maße deformierbarer Kunststoff gewählt wird. Dieser ist beispielsweise mit Übermaß gefertigt und wird beim Anordnen der Masken auf den Werkzeughälften komprimiert. Durch diese Formänderung wird das Übermaß reduziert bzw. entfernt, wodurch eine passgenaue Anordnung erzielt wird.

Je nachdem, welche Funktion bzw. welche Optik das herzustellende Bauteil bzw. dessen Außenschicht aufweisen soll und je nach Gegebenheiten und Möglichkeiten an der Produktionsstätte kann es sinnvoll sein, dass der erste Werkstoff auf die ersten Oberflächen und/ oder auf die zweiten Oberflächen mit einer nicht-konstanten Schichtdicke aufgetragen wird.

Bevorzugt wird der erste Werkstoff zumindest auf die ersten Oberflächen durchgehend aufgetragen. Eine nicht-durchgehende Beschichtung, also ein Auftrag auf die ersten Oberflächen mit Leerstellen kann beispielsweise aus optischen oder funktionellen Gründen gewünscht sein.

In der Praxis hat es sich als vorteilhaft erwiesen, wenn die Schichtdicke des aufgetragenen ersten Werkstoffs einen Wert aus einem Bereich von 0-50 µm, bevorzugt aus einem Bereich von 20-30 µm, besonders bevorzugt 25 µm aufweist.

Der oben erwähnte Unterschied in der übertragbaren Menge an Wärmeenergie kann weiter gesteigert werden, wenn das Material, auf das der Werkstoff aufgetragen wird, jeweils so ausgewählt wird, dass es aufgrund seiner Eigenschaften wie der spezifischen Wärmekapazität, der Dichte und dem Wärmeleitkoeffizienten den Übergang der Energie an den Werkstoff, bevorzugt an den Lack, in einem hohen oder aber eben nur geringen Maße fördert. Bekanntermaßen gibt Stahl im Gegensatz zu Kunststoff Wärme sehr gut ab. Insofern ist es zur Reduzierung bzw. zur Unterstützung der Aushärtung des Werkstoffs sinnvoll, wenn die Masken aus Kunststoff und/ oder die Werkzeughälften aus Stahl sind.

Eine Abschätzung des Verhältnisses zwischen der ersten Wärmemenge, die vom Werkzeugstahl an den Lack übertragbar ist, und der zweiten Wärmemenge, die vom Kunststoff an den Lack übertragbar ist (jeweils bezogen auf eine Fläche mit gleichem Flächeninhalt), kann mittels des Verhältnisses der Wärmeleitfähigkeitswerte von Werkzeugstahl und verwendetem Kunststoff erfolgen. So beträgt die Wärmeleitfähigkeit 1 von Werkzeugstahl etwa 22 W/mK, wohingegen die Wärmeleitfähigkeit 2 von Polyamid ca. 0,25 W/mK beträgt. Es ergibt sich ein Verhältnis von Wärmeleitfähigkeit 1 zu Wärmeleitfähigkeit 2 von etwa 100. Näherungsweise kann also angenommen werden, dass das Werkzeug eine Wärmemenge überträgt, die um den Faktor 100 höher ist als die Wärmemenge, die der ausgesuchte Kunststoff überträgt, woraus sich die unterschiedlichen Lackaushärtezeiten ergeben.

Beispielsweise wird für die Masken ein Kunststoff wie Polyamid (PA) oder Polyethylenterephtalat (PET) verwendet. Beispielsweise werden Werkzeugstähle für die Werkzeughälften verwendet, die neben Kohlenstoff zum Beispiel Chrom, Wolfram, Silizium, Nickel, Molybdän, Mangan, Vanadium oder Kobalt als Legierungselemente enthalten und die auftretenden Betriebstemperaturen von über 200°C aushalten.

Wenn es die Bedingungen erfordern, kann es gemäß einer weiteren bevorzugten Ausführungsform sinnvoll sein, wenn vor dem Verfahrensschritt b) auf die ersten Oberflächen und/ oder auf die zweiten Oberflächen ein Trennmittel aufgetragen wird. Damit wird erreicht, dass das Bauteil zuverlässig entformt werden kann, ohne dass der Lack vom PU-Schaum abreißt und im Werkzeug verbleibt. Diese Gefahr besteht dann, wenn zwischen Lack und Werkzeug eine bessere Haftung besteht als zwischen Lack und PU-Schaum. Ein weiterer Vorteil des Einsatzes eines Trennmittels besteht darin, dass die Reinigung der Lackmasken bzw. der Werkzeughälften leichter fällt. Der Einsatz von Teflon zu diesem Zweck wird in der Praxis erprobt. Bekannt aus dem Stand der Technik sind zum Beispiel Trennmittel auf Silikonbasis, auf PTFE-Basis, mit oder ohne Wachs, ölhaltig oder ölfrei; weiterhin gibt es Trennmittel auf Basis unterschiedlicher Lösemittel. Bewährt hat sich in der Praxis unter anderem der Einsatz des Trennmittels mit dem Handelsnamen "ACMOSIL 36-4536" von der Firma ACMOS.

Die Aufgabe der Erfindung wird auch gelöst von einem Werkzeug zur Herstellung eines Bauteils mittels eines Spritzguss-Verfahrens, mit einer aus zwei miteinander eine Kavität bildenden Werkzeughälften bestehenden Werkzeugform, wobei die Werkzeughälften jeweils mindestens einen durch erste Oberflächen begrenzten Abschnitt der Kavität und jeweils mindestens einen daran angrenzenden eine erste Kontaktfläche ausbildenden Vollkörper umfassen, mit einer ersten Einrichtung zum Auftragen eines ersten Werkstoffs, und mit einer Temperiervorrichtung zum Temperieren zumindest der Werkzeughälften, wobei zwei Masken vorgesehen sind, welche zweite Kontaktflächen und zweite Oberflächen aufweisen, wobei die zweiten Kontaktflächen auf den ersten Kontaktflächen der Werkzeughälften anordenbar und vor einem Befüllen der Kavität entfernbar sind, wobei auf erste Oberflächen der Abschnitte der Kavität ein erster nach Aushärten eine Außenschicht des Bauteils bildender Anteil des ersten Werkstoffs und/ oder auf die zweiten Oberflächen der auf den Werkzeughälften angeordneten Masken ein zweiter Anteil des ersten Werkstoffs aufbringbar ist, und wobei Übergänge zwischen den ersten Oberflächen und den zweiten Oberflächen stufenfrei sind.

Bevorzugt sind dabei die ersten Kontaktflächen und die zweiten Kontaktflächen spiegelbildlich kongruent zueinander ausgestaltet. Das heißt, die ersten Kontaktflächen werden von den zweiten Kontaktflächen genau abgedeckt, wohingegen der Bereich der ersten Oberflächen der Abschnitte der Kavität frei bleibt.

Die erste Einrichtung zum Aufbringen des ersten Werkstoffs kann beispielsweise eine mit einem Lack-Aerosol gefüllte Sprühdose sein, die manuell oder automatisch bedient wird.

Die Temperiervorrichtung zum Temperieren zumindest der Werkzeughälften ist dabei so ausgestaltet, dass die Werkzeughälften und damit die ersten Oberflächen der Anteile der Kavität beheizbar sind. Die Wärmeenergie ist also mittels der Temperiervorrichtung erzeugbar und ggf. über den Vollkörper der Werkzeugform bis zu den ersten Oberflächen leitbar. Dort kann anschließend ein Übergang der Wärmeenergie in den ersten Werkstoff stattfinden. Bei diesem Werkzeug ist es weiterhin vorteilhaft, wenn wie oben beschrieben die Masken aus Kunststoff und/ oder die Werkzeughälften aus Stahl sind.

Des Weiteren ist es vorteilhaft, wenn das Werkzeug eine zweite Einrichtung zum Aufbringen eines Trennmittels auf die ersten und/ oder zweiten Oberflächen aufweist. Auch diese Einrichtung kann manuell oder automatisch bedienbar sein. Das Trennmittel wird bevorzugt vor dem ersten Werkstoff aufgebracht.
Ferner weist das hier beschriebene Werkzeug vorzugsweise die gleiche vorteilhafte Ausgestaltung und die gleichen Vorteile auf wie die vorher beschriebenen Ausführungsformen des erfindungsgemäßen Verfahrens und umgekehrt.

Vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen.

Es zeigen:
- Fig. 1: in einer perspektivischen Darstellung ein erfindungsgemäßes Werkzeug während eines ersten Verfahrensschritts;
- Fig. 2: in einer perspektivischen Darstellung das Werkzeug aus Figur 1 während eines zweiten Verfahrensschritts;
- Fig. 3a, 3b: Querschnittsdarstellungen des Werkzeugs gemäß Figur 2;
- Fig. 4: in einer perspektivischen Darstellung das Werkzeug aus Figur 1 während eines dritten Verfahrensschritts.

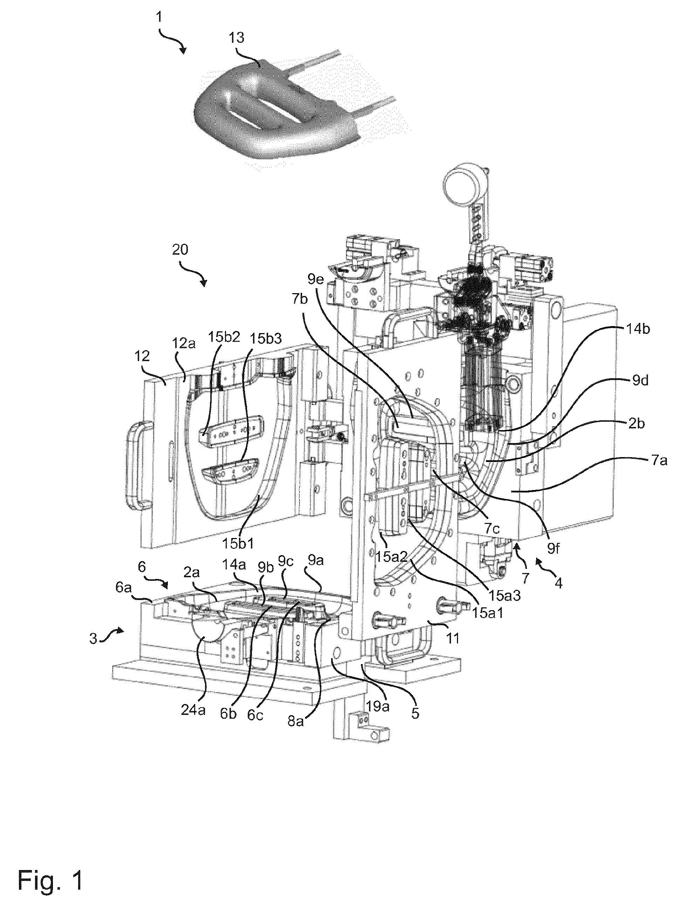

In Fig. 1 ist in einer perspektivischen Darstellung das erfindungsgemäße Werkzeug 20 im geöffneten Zustand gezeigt. Beide Werkzeughälften 3, 4 der Werkzeugform 5 sind auseinandergefahren dargestellt, wobei die Werkzeughälfte 3 zur besseren Übersicht um 90° verschwenkt dargestellt ist. Es versteht sich, dass im Normalfall die Werkzeughälften 3, 4 im geöffneten Zustand so angeordnet sind, dass deren Kontaktflächen 6, 7 parallel und einander zugewandt ausgerichtet sind. Gut zu sehen ist, dass beide Kontaktflächen 6, 7 aus mehreren Kontaktflächenabschnitten 6a, 6b, 6c bzw. 7a, 7b, 7c bestehen, da hier zum Beispiel die Strebe der späteren Kopfstütze, mithin des Bauteils 1, ausgebildet werden soll. So ist ein erster Kontaktflächenabschnitt 6a bzw. 7a jeweils außen und weitere erste Kontaktflächenabschnitte 6b, 6c bzw. 7b, 7c innen ausgebildet, wobei die einzelnen Kontaktflächenabschnitte jeweils durch die Anordnung der ersten Oberflächen 14a bzw. 14b zueinander beabstandet ausgebildet sind.

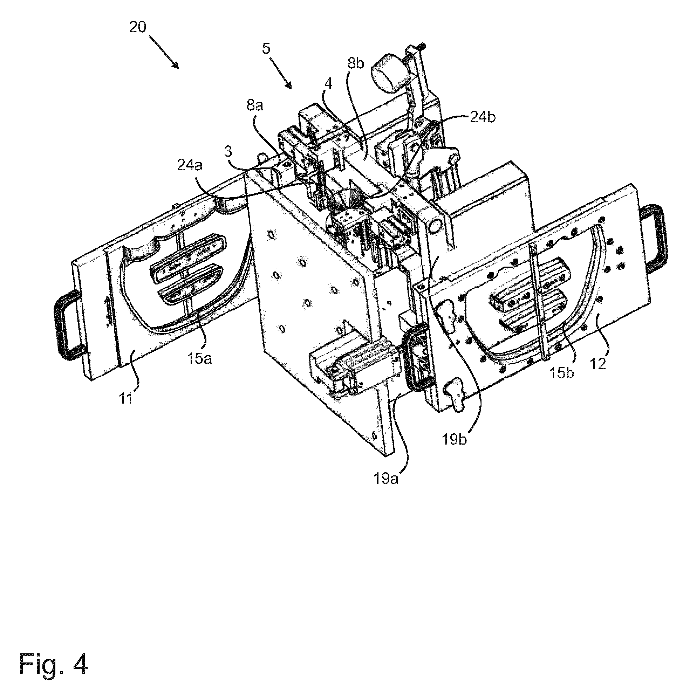

Die Darstellung gemäß Figur 1 erlaubt einen Blick auf die Abschnitte 2a, 2b der Kavität 2 der Werkzeugform 5, die die spätere Form des ebenfalls gezeigten Bauteils 1 abbilden und mittels der ersten Oberflächen 14a, 14b begrenzt werden. Dabei ist der erste Abschnitt 2a der Kavität 2 in der ersten Werkzeughälfte 3 und der zweite Abschnitt 2b der Kavität 2 in der zweiten Werkzeughälfte 4 ausgebildet. Die erste Oberfläche 14a des ersten Abschnitts 2a der Kavität 2 wird am Übergang zur ersten Kontaktfläche 6 bzw. zu den Kontaktflächenabschnitten 6a, 6b, 6c der ersten Werkzeughälfte 3 mittels der Trennkanten 9a, 9b, 9c begrenzt, wobei die erste Oberfläche 14b des zweiten Abschnitts 2b der Kavität 2 am Übergang zur ersten Kontaktfläche 7 bzw. zu den Kontaktflächenabschnitten 7a, 7b, 7c der zweiten Werkzeughälfte 4 mittels der Trennkanten 9d, 9e, 9f begrenzt wird. Zur besseren Übersichtlichkeit weisen die Referenzlinien der Trennkannten 9a-9f jeweils nur auf einen Punkt der Kante. In diesem Ausführungsbeispiel ist an diesen Übergängen zusätzlich eine Erhebung an der ersten Werkzeughälfte 3 bzw. eine Vertiefung an der zweiten Werkzeughälfte 4 ausgebildet, wodurch ein passgenaues Zusammenfügen beider Werkzeughälften 3, 4 zum Erreichen eines geschlossenen Zustands der Werkzeugform (siehe Fig. 4) erleichtert wird. Zwischen den ersten Kontaktflächen 6,7 und den ersten Oberflächen 14a, 14b ist bevorzugt jeweils ein Winkel aus einem Bereich von 60° bis 120°, bevorzugt ein Winkel von 90° ausgebildet.

Zwei Anteile 24a, 24b eines Zuführkanals sind in den Werkzeughälften 3, 4 ausgebildet (siehe Fig. 4). Diese dienen bekanntermaßen dem Zuführen des für den Schäumvorgang notwendigen Werkstoffs bzw. der Werkstoffe und bilden später einen am Bauteil 1 angeordneten Anguss, welcher nicht zur gewünschten Form desselben gehört und vor Verwendung des Bauteils 1 entfernt wird.

Weiterhin gezeigt sind in Fig. 1 zwei Masken 11, 12 in einem zurückgeschwenkten Zustand. Zu sehen ist an der zweiten Maske 12 die zweite Kontaktfläche 12a und zweite Oberflächen 15b1, 15b2, 15b3. Bei der ersten Maske 11 ist aufgrund der Perspektive die entsprechende zweite Kontaktfläche 11a nicht zu sehen, wohl aber die zweiten Oberflächen 15a1, 15a2, 15a3. Zwischen den zweiten Kontaktflächen 11a, 12a und den zweiten Oberflächen 15a1, 15a2, 15a3, 15b1, 15b2, 15b3 ist bevorzugt jeweils ein Winkel aus einem Bereich von 60° bis 120°, bevorzugt ein Winkel von 90° ausgebildet.

Zur Veranschaulichung ist ebenfalls ein Bauteil 1 gezeigt, dass bereits entformt wurde und eine Außenschicht 13 aufweist.

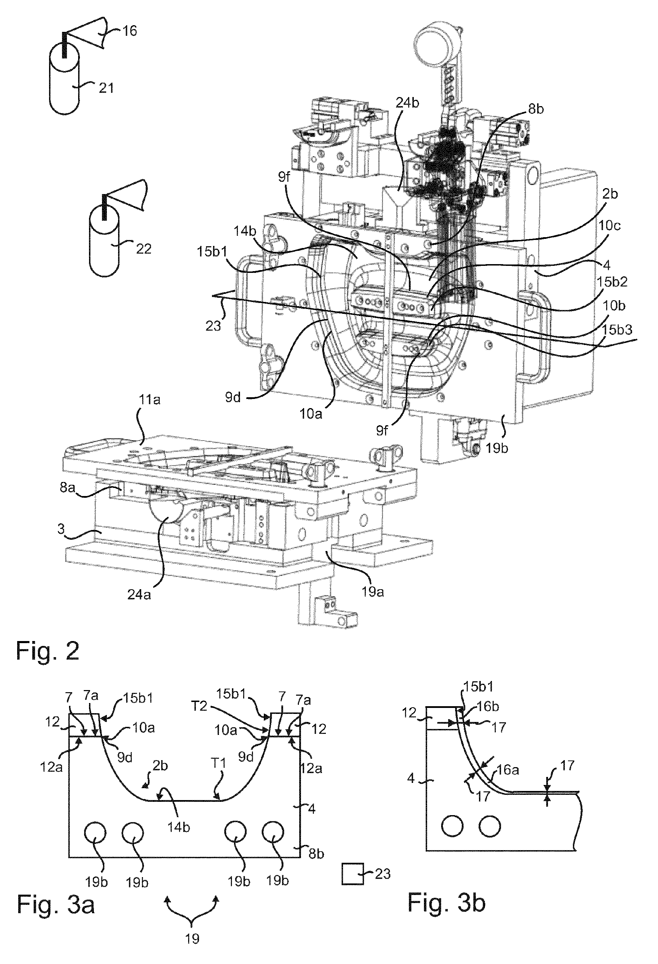

Fig. 2 zeigt ebenfalls die Werkzeugform 5 im geöffneten Zustand. Ebenfalls abgebildet ist eine erste Einrichtung 21 zum Auftragen eines ersten Werkstoffs 16, die hier in Form einer Sprühdose vorliegt. Diese enthält beispielsweise einen Lack in Form eines Aerosols. Weiterhin gezeigt ist eine zweite Einrichtung 22 zum Auftragen eines Trennmittels, die hier ebenfalls in Form einer Sprühdose vorliegt.

Beide Masken 11, 12 sind nun bereits auf den Werkzeughälften 3, 4 angeordnet, wobei die erste Maske 11 auf der ersten Werkzeughälfte 3 und die zweite Maske 12 auf der zweiten Werkzeughälfte 4 angeordnet ist. Nicht mehr zu sehen sind die ersten Kontaktflächen 6, 7 bzw. 6a-6c und 7a-7c der Werkzeughälften 3, 4 und die zweiten Kontaktflächen 11a, 12a der Masken 11, 12, da diese nun jeweils paarweise einander zugewandt und kontaktierend angeordnet sind. Am Beispiel der zweiten Werkzeughälfte 4 ist gut zu sehen, dass die erste Kontaktfläche 7 vollständig von der Maske 12 abgedeckt wird; und zwar ist die die erste Kontaktfläche 7 kontaktierende zweite Kontaktfläche 12a zu ersten Kontaktfläche 7 bzw. zu deren Abschnitten 7a, 7b, 7c spiegelbildlich kongruent ausgebildet. Dadurch entstehen Übergänge 10a, 10b, 10c zwischen den zweiten Oberflächen 15b1, 15b2, 15b3 der Maske 12 und der ersten Oberfläche 14b der Werkzeughälfte 4 an den Trennkanten 9d, 9e, 9f.

Figur 3a zeigt nun einen Querschnitt durch die zweite Werkzeughälfte 4 gemäß Figur 2, der durch die Ebene 23 definiert wird. Zu dieser Ebene 23 ist die erste Kontaktfläche 7 senkrecht angeordnet. Die Kante 9d wird ebenfalls von der Ebene 23 geschnitten und verläuft in einem Winkel zu dieser.

Zu sehen ist die zweite Werkzeughälfte 4 mit erster Kontaktfläche 7 bzw. Kontaktflächenabschnitt 7a und erster Oberfläche 14b, wodurch der zweite Abschnitt 2b der Kavität 2 ausgebildet wird. Gleichzeitig sind Anteile 19b einer Temperiervorrichtung 19 gezeigt, die hier in Form eines Fluidleitsystems vorliegt, mittels welchem der Vollkörper 8b der Werkzeughälfte 4 heizbar ist. Die entstandene Wärmemenge kann von den gezeigten Rohren 19b der Temperiervorrichtung 19 durch den Vollkörper 8b hindurch bis zu der ersten Oberfläche 14b des Abschnitts 2b der Kavität 2 geleitet werden, so dass die erste Oberfläche 14b auf eine erste Temperatur T1 erwärmt wird. Es ist verständlich, dass eine ähnliche Temperiervorrichtung 19a in der ersten Werkzeughälfte 3 vorliegen kann.

Auf der zweiten Werkzeughälfte 4 ist die zweite Maske 12 angeordnet, wobei die zweite Kontaktfläche 12a der Maske 12 auf der ersten Kontaktfläche 7 aufliegt, mithin mit dieser kontaktierend ausgebildet ist. Die erste Oberfläche 14b der zweiten Werkzeughälfte 4 sowie die gezeigten zweiten Oberflächen 15b1 der Maske 12 liegen dabei aber noch frei und sind nicht abgedeckt. Der Übergang 10a zwischen der ersten Oberfläche 14b und der zweiten Oberfläche 15b1 ist wie gezeigt stufenfrei ausgebildet. Auf der zweiten Oberfläche 15b1 herrscht die Temperatur T2, welche beispielsweise um 30K niedriger ist als die erste Temperatur T1.

In diesem Zustand kann nun einerseits das Auftragen eines Trennmittels mittels der zweiten Einrichtung 22 und andererseits das Auftragen eines ersten Werkstoffs 16 mittels der ersten Einrichtung 21 erfolgen. Figur 3b zeigt, dass auf die erste Oberfläche 14b und die zweite Oberfläche 15b1 ein erster 16a bzw. zweiter Anteil 16b des ersten Werkstoffs 16 aufgetragen wurde, deren Grenze zueinander in der Zeichnung durch eine virtuelle Trennlinie veranschaulicht wird. Hierbei ist die Schichtdicke 17 des aufgetragenen ersten Werkstoffs 16 nicht-konstant ausgebildet.

Mittels der Temperiervorrichtung 19a, 19b ist es möglich, dass der erste Anteil 16a schneller aushärtet als der zweite Anteil 16b. Unterstützt wird dieser Unterschied noch durch die geeignete Werkstoffauswahl für Masken 11, 12 und Werkzeugform 5 bzw. -hälften 3, 4.

Fig. 4 zeigt nun, dass wie oben beschrieben vor Aushärten des zweiten Anteils 16b die Masken 11, 12 wieder von den Werkzeughälften 3, 4 entfernt wurden, aber noch in der Abbildung zu sehen sind. Die beiden ersten Kontaktflächen 6, 7 der Werkzeughälften 3, 4 werden zueinander kontaktierend ausgerichtet, mithin die Werkzeugform 5 geschlossen. Über den durch die beiden Anteile 24a, 24b ausgebildeten Zuführkanal kann nun die Füllung der Kavität 2 mit mindestens einem zweiten Werkstoff 18 erfolgen. Nach dem Schäumen und Aushärten des Schaums kann anschließend das Bauteil 1 entformt werden. Sowohl die ersten Oberflächen 14a, 14b als auch die zweiten Oberflächen 15a1, 15a2, 15a3, 15b1, 15b2, 15b3 werden anschließend gereinigt und für den nächsten Zyklus vorbereitet.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Bauteil
- 2: Kavität
- 2a, 2b: Abschnitte der Kavität
- 3,4: Werkzeughälfte
- 5: Werkzeugform
- 6, 7: erste Kontaktflächen
- 6a-c, 7a-c: Kontaktflächenabschnitte
- 8a, 8b: Vollkörper
- 9a-9f: Trennkante
- 10a, 10b: Übergänge
- 11, 12: Maske
- 11a, 12a: zweite Kontaktflächen
- 13: Bauteilaußenschicht
- 14a, 14b: erste Oberflächen
- 15a1-15a3, 15b1-15b3: zweite Oberflächen
- 16: erster Werkstoff
- 16a: erster Anteil
- 16b: zweiter Anteil
- 17: Schichtdicke
- 18: zweiter Werkstoff
- 19a, 19b: Temperiervorrichtung
- 20: Werkzeug
- 21: erste Einrichtung
- 22: zweite Einrichtung
- 23: Schnittebene
- 24a, 24b: Anteile des Zuführkanals
- T1, T2: Temperaturen

## Patentansprüche

1. Verfahren zum Herstellen eines Bauteils (1), welches bevorzugt aus Polyurethanschaum (PU-Schaum) besteht und welches eine Außenschicht (13) aufweist, unter Verwendung einer Werkzeugform (5), welche zwei miteinander eine Kavität (2) bildende Werkzeughälften (3, 4) umfasst, wobei die Werkzeughälften (3, 4) jeweils mindestens einen durch erste Oberflächen (14a, 14b) begrenzten Abschnitt (2a, 2b) der Kavität (2) und jeweils mindestens einen daran angrenzenden eine erste Kontaktfläche (6, 7) ausbildenden Vollkörper (8a, 8b) umfassen, wobei zwischen den ersten Oberflächen (14a, 14b) und der ersten Kontaktfläche (6, 7) jeweils mindestens eine Trennkante (9a, 9b, 9c, 9d, 9e, 9f) ausgebildet ist,
die folgenden Verfahrensschritte umfassend:
a) Anordnen jeweils einer Maske (11, 12) auf die voneinander beabstandeten Werkzeughälften (3, 4), wobei jeweils an der Maske (11, 12) angeordnete zweite Kontaktflächen (11a, 12a) die ersten Kontaktflächen (6, 7) abdecken,
b) Erwärmen der ersten Oberflächen (14a, 14b) auf eine erste Temperatur (T1), wobei eine Differenz zwischen der ersten Temperatur (T1) und einer zweiten Temperatur (T2) von zweiten Oberflächen (15a1, 15a2, 15a3, 15b1, 15b2, 15b3) der Masken (11, 12) einen Wert aus einem Bereich von 5 bis 100 K, bevorzugt 20 bis 40 K, weiter bevorzugt 30 K beträgt,
c) Anordnen eines ersten nach Aushärtung die Außenschicht (13) bildenden nicht-ausgehärteten Anteils (16a) eines ersten Werkstoffs (16) auf die ersten Oberflächen (14a, 14b) und eines zweiten nicht-ausgehärteten Anteils (16b) des ersten Werkstoffs (16) auf die zweiten Oberflächen (15a1, 15a2, 15a3, 15b1, 15b2, 15b3),
d) Entfernen der Masken (11, 12) von den Werkzeughälften (3, 4) vor einem vollständigen Aushärten des zweiten Anteils (16b) des Werkstoffs (16), wobei ein Aushärtegrad des ersten Anteils (16a) höher ist als ein Aushärtegrad des zweiten Anteils (16b),
e) Schließen der Werkzeugform (5) durch Zusammenbringen der beiden ersten Kontaktflächen (6, 7) der Werkzeughälften (3, 4),
f) Einfüllen mindestens eines zweiten Werkstoffs (18) in die Kavität (2).

2. Verfahren nach Anspruch 1,
**dadurch gekennzeichnet, dass**
der erste Anteil (16a) und/ oder der zweite Anteil (16b) des Werkstoffs (16) in Form eines Lacks, bevorzugt in Form eines Aerosols, aufgetragen wird.

3. Verfahren nach Anspruch 1 oder 2,
**dadurch gekennzeichnet, dass**
Übergänge (10a, 10b) an der mindestens einen Trennkante (9a, 9b, 9c) zwischen den zweiten Oberflächen (15a1, 15a2, 15a3, 15b1, 15b2, 15b3) und den ersten Oberflächen (14a, 14b) stufenfrei sind.

4. Verfahren nach einem der vorangegangenen Ansprüche,
**dadurch gekennzeichnet, dass**
der erste Werkstoff (16) auf die ersten Oberflächen (14a, 14b) und/ oder auf die zweiten Oberflächen (15a1, 15a2, 15a3, 15b1, 15b2, 15b3) mit einer nicht-konstanten Schichtdicke (17) aufgetragen wird.

5. Verfahren nach Anspruch 4,
**dadurch gekennzeichnet, dass**
die Schichtdicke (17) des aufgetragenen ersten Werkstoffs (16) einen Wert aus einem Bereich von 0-50 µm, bevorzugt aus einem Bereich von 20-30 µm, besonders bevorzugt 25 µm aufweist.

6. Verfahren nach einem der vorangegangenen Ansprüche,
**dadurch gekennzeichnet, dass**
die Masken (11, 12) aus Kunststoff und/ oder die Werkzeughälften (3, 4) aus Stahl sind.

7. Verfahren nach einem der vorangegangenen Ansprüche,
**dadurch gekennzeichnet, dass**
vor dem Verfahrensschritt c) auf die ersten Oberflächen (14a, 14b) und/ oder auf die zweiten Oberflächen (15a1, 15a2, 15a3, 15b1, 15b2, 15b3) ein Trennmittel aufgetragen wird.

8. Werkzeug (20) zur Herstellung eines Bauteils (1) mittels eines Spritzguss-Verfahrens, mit einer aus zwei miteinander eine Kavität (2) bildenden Werkzeughälften (3, 4) bestehenden Werkzeugform (5), wobei die Werkzeughälften (3, 4) jeweils mindestens einen durch erste Oberflächen (14a, 14b) begrenzten Abschnitt (2a, 2b) der Kavität (2) und jeweils mindestens einen daran angrenzenden eine erste Kontaktfläche (6, 7) ausbildenden Vollkörper (8a, 8b) umfassen, mit einer ersten Einrichtung (21) zum Auftragen eines ersten Werkstoffs (16), und mit einer Temperiervorrichtung (19) zum Temperieren zumindest der Werkzeughälften (3, 4),
**gekennzeichnet durch**
zwei Masken (11, 12), welche zweite Kontaktflächen (11a, 12a) und zweite Oberflächen (15a1, 15a2, 15a3, 15b1, 15b2, 15b3) aufweisen, wobei die zweiten Kontaktflächen (11a, 12a) auf den ersten Kontaktflächen (6, 7) der Werkzeughälften (3, 4) anordenbar und vor einem Befüllen der Kavität (2) entfernbar sind,
wobei auf erste Oberflächen (14a, 14b) der Abschnitte (2a, 2b) der Kavität (2) ein erster nach Aushärten eine Außenschicht (13) des Bauteils (1) bildender Anteil (16a) des ersten Werkstoffs (16) und/ oder auf die zweiten Oberflächen (15a1, 15a2, 15a3, 15b1, 15b2, 15b3) der auf den Werkzeughälften (3, 4) angeordneten Masken (11, 12) ein zweiter Anteil (16b) des ersten Werkstoffs (16) aufbringbar ist,
und wobei Übergänge (10a, 10b) zwischen den ersten Oberflächen (14a, 14b) und den zweiten Oberflächen (15a1, 15a2, 15a3, 15b1, 15b2, 15b3) stufenfrei sind.

9. Werkzeug (20) nach Anspruch 8,
**gekennzeichnet durch**
eine zweite Einrichtung (22) zum Aufbringen eines Trennmittels auf die ersten (14a, 14b) und/ oder zweiten Oberflächen (15a1, 15a2, 15a3, 15b1, 15b2, 15b3).

## Claims

1. Method for producing a component (1), which preferably consists of polyurethane foam (PU foam) and which has an outer layer (13), using a tool mould (5) which comprises two tool halves (3, 4) which together form a cavity (2), wherein the tool halves (3, 4) each comprise at least one section (2a, 2b) of the cavity (2), which section is delimited by first surfaces (14a, 14b), and each comprise at least one adjacent solid body (8a, 8b) which forms a first contact surface (6, 7), wherein at least one separating edge (9a, 9b, 9c, 9d, 9e, 9f) is formed between the first surfaces (14a, 14b) and the first contact surface (6, 7),
comprising the following method steps:
a) arranging a shell (11, 12) on each of the tool halves (3, 4), which are spaced apart from one another, wherein second contact surfaces (11 a, 12a) that are each arranged on the shell (11, 12) cover the first contact surfaces (6, 7),
b) heating the first surfaces (14a, 14b) to a first temperature (T1), wherein a difference between the first temperature (T1) and a second temperature (T2) of second surfaces (15a1, 15a2, 15a3, 15b1, 15b2, 15b3) of the shells (11, 12) is a value ranging from 5 to 100 K, preferably 20 to 40 K, more preferably 30 K,
c) arranging a first uncured portion (16a) of a first material (16), which portion forms the outer layer (13) after curing, on the first surfaces (14a, 14b) and a second uncured portion (16b) of the first material (16) on the second surfaces (15a1, 15a2, 15a3, 15b1, 15b2, 15b3),
d) removing the shells (11, 12) from the tool halves (3, 4) before the second portion (16b) of the material (16) completely cures, wherein a degree of curing of the first portion (16a) is greater than a degree of curing of the second portion (16b),
e) closing the tool mould (5) by bringing together the two first contact surfaces (6, 7) of the tool halves (3, 4),
f) pouring at least a second material (18) into the cavity (2).

2. Method according to claim 1,
**characterised in that**
the first portion (16a) and/or the second portion (16b) of the material (16) is applied in the form of a lacquer, preferably in the form of an aerosol.

3. Method according to either claim 1 or claim 2,
**characterised in that**
transitions (10a, 10b) at the at least one separating edge (9a, 9b, 9c) between the second surfaces (15a1, 15a2, 15a3, 15b1, 15b2, 15b3) and the first surfaces (14a, 14b) are continuous.

4. Method according to any of the preceding claims,
**characterised in that**
the first material (16) is applied to the first surfaces (14a, 14b) and/or to the second surfaces (15a1, 15a2, 15a3, 15b1, 15b2, 15b3) so as to have a non-constant layer thickness (17).

5. Method according to claim 4,
**characterised in that**
the layer thickness (17) of the applied first material (16) has a value ranging from 0 to 50 µm, preferably ranging from 20 to 30 µm, particularly preferably of 25 µm.

6. Method according to any of the preceding claims,
**characterised in that**
the shells (11, 12) are made of plastics material and/or the tool halves (3, 4) are made of steel.

7. Method according to any of the preceding claims,
**characterised in that**,
before method step c), a separating means is applied to the first surfaces (14a, 14b) and/or to the second surfaces (15a1, 15a2, 15a3, 15b1, 15b2, 15b3).

8. Tool (20) for producing a component (1) by means of an injection moulding process, comprising a tool mould (5) which consists of two tool halves (3, 4), which together form a cavity (2), the tool halves (3, 4) each comprising at least one section (2a, 2b) of the cavity (2), which section is delimited by first surfaces (14a, 14b), and each comprising at least one adjacent solid body (8a, 8b) which forms a first contact surface (6, 7), comprising a first device (21) for applying a first material (16) and comprising a temperature control apparatus (19) for controlling the temperature of at least the tool halves (3, 4),
**characterised by**
two shells (11, 12) which comprise second contact surfaces (11 a, 12a) and second surfaces (15a1, 15a2, 15a3, 15b1, 15b2, 15b3), the second contact surfaces (11 a, 12a) being able to be arranged on the first contact surfaces (6, 7) of the tool halves (3, 4) and removed before the cavity (2) is filled,
it being possible for a first portion (16a) of the first material (16), which portion forms an outer layer (13) of the component (1) after curing, to be applied to first surfaces (14a, 14b) of the sections (2a, 2b) of the cavity (2) and/or for a second portion (16b) of the first material (16) to be applied to the second surfaces (15a1, 15a2, 15a3, 15b1, 15b2, 15b3) of the shells (11, 12) arranged on the tool halves (3, 4), and transitions (10a, 10b) between the first surfaces (14a, 14b) and the second surfaces (15a1, 15a2, 15a3, 15b1, 15b2, 15b3) being continuous.

9. Tool (20) according to claim 8,
**characterised by**
a second device (22) for applying a separating means to the first (14a, 14b) and/or second surfaces (15a1, 15a2, 15a3, 15b1, 15b2, 15b3).

## Revendications

1. Procédé pour la fabrication d'un composant (1), qui est constitué de préférence d'une mousse de polyuréthane (mousse PU) et qui comprend une couche externe (13), à l'aide d'une forme d'outil (5), qui comprend deux moitiés d'outils (3, 4) formant une cavité (2) entre eux, dans lequel les moitiés d'outils (3, 4) comprennent chacune une portion (2a, 2b) de la cavité (2), limitée par des premières surfaces (14a, 14b) et chacune au moins un corps complet (8a, 8b) adjacent formant une première surface de contact (6, 7), au moins une arête de séparation (9a, 9b, 9c, 9d, 9e, 9f) étant réalisée entre les premières surfaces (14a, 14b) et la première surface de contact (6, 7), comprenant les étapes suivantes :
a) disposition d'un masque (11, 12) respectivement sur les moitiés d'outil (3, 4), distantes l'une de l'autre, des deuxièmes surfaces de contact (11 a, 12a) sur le masque (11, 12) recouvrant respectivement les premières surfaces de contact (6, 7),
b) chauffage des premières surfaces (14a, 14b) à une première température (T1), une différence entre la première température (T1) et une deuxième température (T2) des deuxièmes surfaces (15a1, 15a2, 15a3, 15b1, 15b2, 15b3) des masques (11, 12) étant égale à une valeur dans un intervalle de 5 à 100 K, de préférence de 20 à 40 K, de préférence égale à 30 K,
c) disposition d'une première partie non durcie (16a), d'un premier matériau (16), formant, après durcissement, la couche externe (13), sur les premières surfaces (14a, 14b) et d'une deuxième partie non durcie (16b) du premier matériau (16) sur les deuxièmes surfaces (15a1, 15a2, 15a3, 15b1, 15b2, 15b3),
d) élimination des masques (11, 12) des moitiés d'outil (3, 4) avant un durcissement complet de la deuxième partie (16b) du matériau (16), un taux de durcissement de la première partie (16a) étant supérieur à un taux de durcissement de la deuxième partie (16b),
e) fermeture de la forme d'outil (5) par assemblage des deux premières surfaces de contact (6, 7) des moitié d'outil (3, 4),
f) introduction d'au moins un deuxième matériau (18) dans la cavité (2).

2. Procédé selon la revendication 1,
**caractérisé en ce que**
la première partie (16a) et/ou la deuxième partie (16b) du matériau (16) est appliquée sous la forme d'une peinture, de préférence sous la forme d'un aérosol.

3. Procédé selon la revendication 1 ou 2,
**caractérisé en ce que**
des transitions (10a, 10b) au niveau de l'au moins une arête de séparation (9a, 9b, 9c) entre les deuxièmes surfaces (15a1, 15a2, 15a3, 15b1, 15b2, 15b3) et les premières surfaces (14a, 14b) sont progressives.

4. Procédé selon l'une des revendications précédentes,
**caractérisé en ce que**
le premier matériau (16) est appliqué sur les premières surfaces (14a, 14b) et/ou sur les deuxièmes surfaces (15a1, 15a2, 15a3, 15b1, 15b2, 15b3) avec une épaisseur de couche (17) non constante.

5. Procédé selon la revendication 4,
**caractérisé en ce que**
l'épaisseur de couche (17) du premier matériau (16) appliqué présente une valeur dans un intervalle de 0 à 50 µm, de préférence dans un intervalle de 20 à 30 µm, d'une manière particulièrement préférée est égale à 25 µm.

6. Procédé selon l'une des revendications précédentes,
**caractérisé en ce que**
les masques (11, 12) sont constitués de matière plastique et/ou les moitiés d'outil (3, 4) sont constituées d'acier.

7. Procédé selon l'une des revendications précédentes,
**caractérisé en ce qu'**
avant l'étape c), un produit de séparation est appliqué sur les premières surfaces (14a, 14b) et/ou sur les deuxièmes surfaces (15a1, 15a2, 15a3, 15b1, 15b2, 15b3).

8. Outil (20) pour la fabrication d'un composant (1) au moyen d'un procédé de moulage par injection, avec une forme d'outil (5) constituée de deux moitiés d'outil (3, 4) formant entre elles une cavité (2), les moitiés d'outil (3, 4) comprenant chacune au moins une portion (2a, 2b) de la cavité (2), limitée par des premières surfaces (14a, 14b), et chacune au moins un corps entier (8a, 8b) adjacent formant une première surface d contact (6, 7), avec un premier dispositif (21) pour l'application d'un premier matériau (16) et avec un dispositif de régulation de température (19) pour la régulation de la température d'au moins les moitiés d'outil (3, 4),
**caractérisé par**
deux masques (11, 12) qui comprennent des deuxièmes surfaces de contact (11a, 12a) et des deuxièmes surfaces (15a1, 15a2, 15a3, 15b1, 15b2, 15b3), les deuxièmes surfaces de contact (11a, 12a) pouvant être disposées sur les premières surfaces de contact (6, 7) des moitiés d'outil (3, 4) et pouvant être éliminées avant un remplissage de la cavité (2),
sur des premières surfaces (14a, 14b) des portions (2a, 2b) de la cavité (2), une première partie (16a) du premier matériau (16), formant, après durcissement, une couche externe (13) du composant (1) et/ou sur les deuxièmes surfaces (15a1, 15a2, 15a3, 15b1, 15b2, 15b3) des masques (11, 12) disposés sur les moitiés d'outil (3, 4), une deuxième partie (16b) du premier matériau (16) pouvant être appliquée,
et les transitions (10a, 10b) entre les premières surfaces (14a, 14b) et les deuxièmes surfaces (15a1, 15a2, 15a3, 15b1, 15b2, 15b3) étant progressives.

9. Outil (20) selon la revendication 8,
**caractérisé par**
un deuxième dispositif (22) pour l'application d'un produit de séparation sur les premières surfaces (14a, 14b) et/ou sur les deuxièmes surfaces (15a1, 15a2, 15a3, 15b1, 15b2, 15b3).
